# EUROPEAN PATENT SPECIFICATION

(11) **EP 2 894 365 B1**
(45) Date of publication and mention of the grant of the patent: **31.05.2017**
(21) Application number: 13832482.7
(22) Date of filing: 11.06.2013
(51) Int. Cl.: E04H 9/02, F16F 1/40, F16F 15/04, E01D 19/04, E04B 1/98, E04B 1/36, F16F 9/30

(54) **SEISMIC BASE ISOLATION DEVICE**
SEISMISCHE GRUNDISOLIERVORRICHTUNG
DISPOSITIF D'ISOLATION DE BASE SISMIQUE

(30) Priority: 03.09.2012 JP 2012193289
(43) Date of publication of application: 15.07.2015
(73) Proprietor: Oiles Corporation, Tokyo 108-0075 (JP)
(72) Inventor: KOCHIYAMA, Osamu, Ashikaga-shi Tochigi 326-0327 (JP); INABA, Kazunori, Ashikaga-shi Tochigi 326-0327 (JP); KANEKO, Shuhei, Tokyo 108-0075 (JP)
(74) Representative: Jackson, Martin Peter
(86) International application number: PCT/JP2013/003672
(87) International publication number: WO 2014/033986

(56) References cited:
- JP-A- S6 429 538
- JP-A- S6 429 539
- JP-A- 2001 140 977
- JP-A- 2002 048 190
- JP-A- 2007 113 649

## Description

### TECHNICAL FIELD

The present invention relates to a seismic isolation apparatus having a laminated rubber body for isolating from seismic vibrations a structure including bridges and such buildings as office buildings, detached houses, and warehouses.

### BACKGROUND ART

In Patent Document 1, for example, a seismic isolation apparatus of a laminated rubber type is proposed which, in order to alleviate the concentration of stress occurring to those portions of a laminated rubber body that are in close proximity to respective ones of an upper flange plate connected to a superstructure of a building and a lower flange plate connected to a substructure of the building, comprises a laminated rubber body which is provided between the upper flange plate and the lower flange plate and is formed by alternately laminating in a vertical direction a plurality of rubber plate layers and a plurality of steel plate layers extending in a horizontal direction, wherein materials and thicknesses of the plurality of rubber plate layers are made mutually identical, and areas of these rubber plate layers are made different, whereby the rigidity of these rubber plate layers is gradually decreased from upper and lower ends of the laminated rubber body toward a central portion thereof.

### PRIOR ART DOCUMENT

### PATENT DOCUMENT

Patent Document 1: JP-A-11-141180

JP S64-29538 and JP S64-29539 disclose a vibration isolation apparatus in accordance with the precharacterising section of claim 1.

JP2001-140977 and JP2002-48190 also disclose a vibration isolation device.

### SUMMARY OF THE INVENTION

### PROBLEMS THAT THE INVENTION IS TO SOLVE

Incidentally, with the seismic isolation apparatus having the laminated rubber, at the time of horizontal deformation due to relative horizontal vibrations between the superstructure and the substructure, stress concentration is likely to occur at those portions (fillet portions) of the laminated rubber body that are in close proximity to respective ones of the upper flange plate and the lower flange plate. Therefore, a means is desired which overcomes the aforementioned stress concentration that can cause buckling, while it is desired that the seismic isolation apparatus be capable of exhibiting the vibration isolation function which it essentially has.

The present invention has been devised in view of the above-described aspects, and its object is to provide a seismic isolation apparatus which is capable of overcoming the stress concentration at the portions of the laminated rubber body that are in close proximity to the respective ones of the upper flange plate and the lower flange plate and which is capable of exhibiting the vibration isolation function which it essentially has.

### MEANS FOR SOLVING THE PROBLEMS

A seismic isolation apparatus between a superstructure and a substructure for isolating the superstructure from horizontal vibrations of the substructure, the seismic isolation apparatus comprising: an upper flange plate which is connected to the superstructure; a lower flange plate which is connected to the substructure; a laminated rubber body which is provided between said upper flange plate and said lower flange plate and has a plurality of rubber elastic material layers and a plurality of rigid material layers, both of which are alternately laminated in a vertical direction and are vulcanization bonded to each other, and a hollow cylindrical cladding layer which covers respective the plurality of rubber elastic material layers and outer peripheral edges of the plurality of rigid material layers in such a manner as to be vulcanization bonded to the outer peripheral edges of the plurality of rigid material layers and is integrally formed with the plurality of rubber elastic material layers; at least one columnar hole which is provided in the laminated rubber body; a cylindrical columnar lead which is disposed in the columnar hole; and a pair of disk-like closure members which are respectively fixed to the upper flange plate and the lower flange plate on a lower surface and an upper surface of the cylindrical columnar lead to close the columnar hole, characterized in that, said plurality of rigid material layers include a plurality of upper rigid material layers disposed in close proximity to said upper flange plate in such a manner as to be juxtaposed to each other in the vertical direction, a plurality of lower rigid material layers disposed in close proximity to said lower flange plate in such a manner as to be juxtaposed to each other in the vertical direction, and a plurality of intermediate rigid material layers disposed between the plurality of upper rigid material layers and the plurality of lower rigid material layers in such a manner as to be arranged in the vertical direction, wherein each of the plurality of upper rigid material layer and the lower rigid material layers is formed to be longer in a horizontal direction than an upper adjacent intermediate rigid material layer so as to project horizontally outwardly from an outer peripheral edge of the upper adjacent intermediate rigid material layer adjacent to the plurality of upper rigid material layers among the plurality of intermediate rigid material layers, each of the plurality of lower rigid material layers is formed to be longer in the horizontal direction than a lower adjacent intermediate rigid material layer so as to project horizontally outwardly from an outer peripheral edge of the lower adjacent intermediate rigid material layer adjacent to the plurality of lower rigid material layers among the plurality of intermediate rigid material layers, the upper adjacent intermediate rigid material layer is formed to be equal in length in the horizontal direction with respect to a central-side intermediate rigid material layer located closer to a central side in the vertical direction than the upper adjacent intermediate rigid material layer among the plurality of intermediate rigid material layers, and the lower adjacent intermediate rigid material layer is formed to be equal in length in the horizontal direction with respect to the central-side intermediate rigid material layer located closer to the central side in the vertical direction than the lower adjacent intermediate rigid material layer among the plurality of intermediate rigid material layers, wherein an upper cladding portion of the cladding layer which covers the plurality of upper rigid material layers projects horizontally outwardly with respect to a cladding portion of the cladding layer which covers the intermediate rigid material layer and is vulcanization bonded to a lower surface of the upper flange plate disposed in close proximity to the plurality of upper rigid material layers, and a lower cladding portion of the cladding layer which covers the plurality of lower rigid material layers projects horizontally outwardly with respect to the cladding portion of the cladding portion which covers the intermediate rigid material layer and is vulcanization bonded to an upper surface of the lower flange plate disposed in close proximity to the plurality of lower rigid material layers, wherein a rubber elastic material layer among the plurality of rubber elastic material layers which comes into contact with the upper flange plate and is interposed between the plurality of upper rigid material layers and the upper flange plate is vulcanization bonded to the lower surface of the upper flange plate, and a rubber elastic material layer among the plurality of rubber elastic material layers which comes into contact with the lower flange plate and is interposed between the plurality of lower rigid material layers and the lower flange plate is vulcanization bonded to the upper surface of the lower flange plate, wherein an upper most rigid material layer disposed in closest proximity to said upper flange plate among the plurality of upper rigid material layers is formed so as to be longer than other upper rigid material layers excluding the uppermost rigid material layer so as to project horizontally outwardly from outer peripheral edges of the other upper rigid material layers excluding the uppermost rigid material layer, and a lowermost rigid material layer disposed in closest proximity to sad lower flange plate among the plurality of lower rigid material layers is formed so as to be longer than other lower rigid material layers excluding the lowermost rigid material layer so as to project horizontally outwardly from outer peripheral edges of the other lower rigid material layers excluding the lowermost rigid material layer, and wherein each of the plurality of upper rigid material layers has an upper circular outer peripheral edge located horizontally outwardly of circular outer peripheral edges of the plurality of intermediate rigid material layers, and each of the plurality of the lower rigid material layer has a lower circular outer peripheral edge located horizontally outwardly of circular outer peripheral edges of the plurality of intermediate rigid material layers, the upper circular outer peripheral edge and the lower circular outer peripheral edge being greater in diameter than the circular outer peripheral edges of the plurality of intermediate rigid material layers.

According to the seismic isolation apparatus in accordance with the present invention, particularly since at least one of the upper rigid material layer and the lower rigid material layer is formed to be longer in the horizontal direction than the adjacent intermediate rigid material layer adjacent to the at least one among the plurality of intermediate rigid material layers, it is possible to overcome the stress concentration at those portions (fillet portions) of the laminated rubber body that are in close proximity to respective ones of the upper flange plate and the lower flange plate. In addition, since the adjacent intermediate rigid material layer is formed to be equal in length or shorter in the horizontal direction than the central-side intermediate rigid material layer located closer to the central side in the vertical direction than the adjacent intermediate rigid material layer among the plurality of intermediate rigid material layers, the seismic isolation apparatus is capable of exhibiting the vibration isolation function which it essentially has without enlarging the apparatus, such that it is possible to exhibit repeated stress durability which the apparatus essentially has and that it is capable of exhibiting the vibration isolation function with respect to a twisting direction as well.

### ADVANTAGES OF THE INVENTION

According to the present invention, it is possible to provide a seismic isolation apparatus which is capable of overcoming the stress concentration at the portions of the laminated rubber body that are in close proximity to the respective ones of the upper flange plate and the lower flange plate and which is capable of exhibiting the vibration isolation function which it essentially has.

### BRIEF DESCRIPTION OF THE DRAWINGS

Fig. 1 is an explanatory cross-sectional view of an embodiment of the present invention;
Fig. 2 is an explanatory enlarged cross-sectional view of the embodiment shown in Fig. 1;
Fig. 3 is an explanatory view of mainly rigid material layers of the embodiment shown in Fig. 1;
Fig. 4 is an explanatory enlarged cross-sectional view of the embodiment shown in Fig. 1;
Fig. 5 is a diagram explaining the operation of the embodiment shown in Fig. 1;
Fig. 6 is an explanatory enlarged cross-sectional view of another embodiment of the present invention; and
Fig. 7 is an explanatory view of mainly rigid material layers of still another embodiment of the present invention.

### MODE FOR CARRYING OUT THE INVENTION

Next, a more detailed description will be given of a mode for carrying out the invention with reference to the preferred embodiments illustrated in the drawings. It should be noted that the invention is not limited to these embodiments.

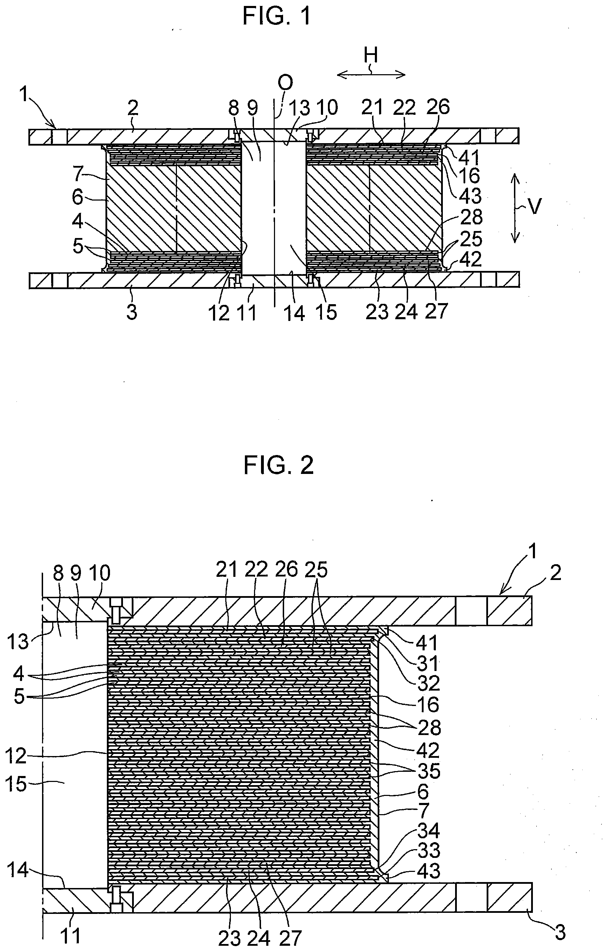

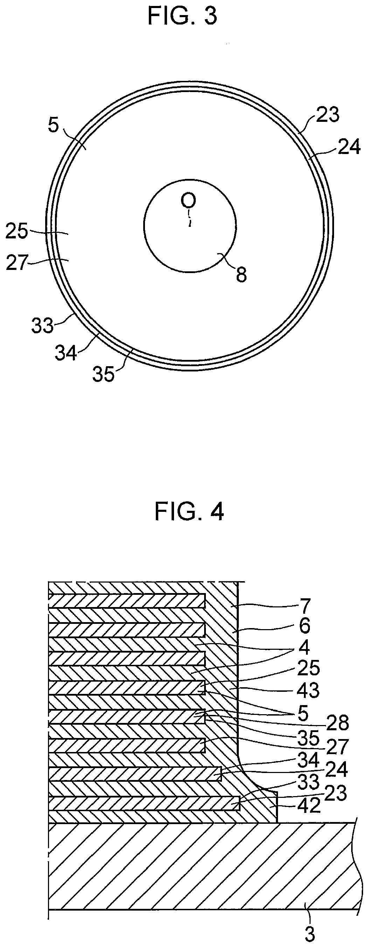

In Figs. 1 to 4, a seismic isolation apparatus 1 in accordance with this embodiment is comprised of an upper flange plate 2 which is connected to a superstructure of a building; a lower flange plate 3 which is connected to a substructure constituted by a foundation and the like; a laminated rubber body 7 which is provided between the upper flange plate 2 and the lower flange plate 3 and has annular rubber elastic material layers 4 formed of a natural rubber or a high damping rubber having a damping characteristic and annular rigid material layers 5, both of which are alternately laminated in a vertical direction V, as well as a cylindrical cladding layer 6 which is vulcanization bonded to outer peripheral edges 16 of the rigid material layers 5 and is integrally formed with the rubber elastic material layers 4; at least one columnar hole, i.e., a columnar hole 8 in this embodiment, which is provided in the laminated rubber body 7; a vibrational energy absorbing body 9 disposed in the columnar hole 8; and a pair of disk-like closure members 10 and 11 which are respectively fixed to the upper flange plate 2 and the lower flange plate 3 on the lower surface and the upper surface of the vibrational energy absorbing body 9 to close the columnar hole 8.

The columnar hole 8 is defined by a lower surface 13 of the upper closure member 10 and an upper surface 14 of the lower closure member 11 in addition to an inner peripheral surface 12 of the laminated rubber body 7, and is disposed in the center of the laminated rubber body 7 in a horizontal direction H. The vibrational energy absorbing body 9 is formed of lead, zinc, a zinc alloy or a plastic body made from a thermoplastic resin, e.g., cylindrical columnar lead 15, which is densely disposed in the columnar hole 8. The cylindrical columnar lead 15 absorbs the vibrational energy by undergoing plastic deformation.

The rigid material layers 5 include two annular upper rigid steel plates 21 and 22 serving as at least one upper rigid material layer disposed in close proximity to the upper flange plate 2 in the vertical direction V; two annular lower rigid steel plates 23 and 24 serving as at least one lower rigid material layer disposed in close proximity to the lower flange plate 3; and a plurality of annular intermediate rigid steel plates 25 serving as a plurality of intermediate rigid material layers disposed between the upper rigid steel plates 21 and 22, on the one hand, and the lower rigid steel plates 23 and 24, on the other hand, in such a manner as to be arranged in the vertical direction V. Each of the upper rigid steel plates 21 and 22, the lower rigid steel plates 23 and 24, and the plurality of intermediate rigid steel plates 25 mentioned above has an identical axis O.

The upper rigid steel plates 21 and 22 are disposed in such a manner as to be juxtaposed to each other in the vertical direction V, the lower rigid steel plates 23 and 24 are disposed in such a manner as to be juxtaposed to each other in the vertical direction V, and the upper rigid steel plates 21 and 22, the lower rigid steel plates 23 and 24, and the plurality of intermediate rigid steel plates 25 are respectively arranged at mutually equal intervals in the vertical direction V and respectively have a mutually equal thickness. As the steel plates having equal thickness are thus arranged at equal intervals, the rubber elastic material layers 4 are also arranged at equal intervals with mutually equal thickness.

The upper rigid steel plate 21 serving as an uppermost rigid material layer disposed in closest proximity to the upper flange plate 2 between the upper rigid steel plates 21 and 22 is formed so as to be longer in a horizontal direction H than the upper rigid steel plate 22, and a circular outer peripheral edge 31 of the upper rigid steel plate 21 is greater in diameter than a circular outer peripheral edge 32 of the upper rigid steel plate 22 and is located horizontally outwardly thereof. The circular outer peripheral edge 31 of the upper rigid steel plate 21 and the circular outer peripheral edge 32 of the upper rigid steel plate 22 are greater in diameter than circular outer peripheral edges 35 of the plurality of intermediate rigid steel plates 25 and are located horizontally outwardly thereof.

The lower rigid steel plate 23 serving as a lowermost rigid material layer disposed in closest proximity to the lower flange plate 3 between the lower rigid steel plates 23 and 24 is formed so as to be longer in the horizontal direction H than the lower rigid steel plate 24, and a circular outer peripheral edge 33 of the lower rigid steel plate 23 is greater in diameter than a circular outer peripheral edge 34 of the lower rigid steel plate 24 and is located horizontally outwardly thereof. The circular outer peripheral edge 33 of the lower rigid steel plate 23 and the circular outer peripheral edge 34 of the lower rigid steel plate 24 are greater in diameter than circular outer peripheral edges 35 of the plurality of intermediate rigid steel plates 25 and are located horizontally outwardly thereof.

In this embodiment, the upper rigid steel plate 21 and the lower rigid steel plate 23 are formed similarly to each other, and the upper rigid steel plate 22 and the lower rigid steel plate 24 are formed similarly to each other. In the above-described rigid material layers 5, each of the upper rigid steel plates 21 and 22 is formed to be longer in the horizontal direction H than an intermediate rigid steel plate 26 serving as an adjacent intermediate rigid material layer adjacent to the upper rigid steel plate 22 among the plurality of intermediate rigid steel plates 25, while each of the lower rigid steel plates 23 and 24 is formed to be longer in the horizontal direction H than an intermediate rigid steel plate 27 serving as an adjacent intermediate rigid material layer adjacent to the lower rigid steel plate 24 among the plurality of intermediate rigid steel plates 25.

The plurality of intermediate rigid steel plates 25 in this embodiment are formed similarly to each other, whereby the steel plates 25 have a mutually equal length in the horizontal direction H, and each of the intermediate rigid steel plates 26 and 27 has an equal length in the horizontal direction H with respect to an intermediate rigid steel plate 28 serving as a central-side intermediate rigid material layer located closer to the central side in the vertical direction V than the steel plates 26 and 27.

The cladding layer 6 includes a large-diameter annular cladding portion 41 which covers the upper rigid steel plates 21 and 22, a large-diameter annular cladding portion 42 which covers the lower rigid steel plates 23 and 24, and an annular cladding portion 43 which covers the plurality of intermediate rigid steel plates 25. The cladding portion 41 is integrally connected to an upper edge of the cladding portion 43, and the cladding portion 42 is integrally connected to a lower edge of the cladding portion 43. The cladding portions 41 and 42 project in the horizontal direction H with respect to the cladding portion 43.

In the case where the seismic isolation apparatus 1 is manufactured, a laminated body is first formed by alternately stacking the rubber elastic material layers 4 and the rigid material layers 5, then the upper flange plate 2 and the lower flange plate 3 are respectively disposed on the upper surface and the lower surface of the laminated body, and after these layers are fixed to each other by such as vulcanization bonding under pressure in a mold to prepare the laminated rubber body 7, lead is press-fitted into the columnar hole 8 to thereby form the cylindrical columnar lead 15 in the columnar hole 8. In the press-fitting of lead, lead is pressed into the columnar hole 8 by a hydraulic ram or the like so that the cylindrical columnar lead 15 is constrained inside the columnar hole 8 by the laminated rubber body 7 without a gap. After the press-fitting of the lead, the closure members 10 and 11 are fitted. It should be noted that, in the formation of the laminated rubber body 7 by vulcanization bonding in the mold under pressure, it suffices if the cylindrical cladding layer 6 is formed in such a manner as to surround the outer peripheral edges 16 of the rigid elastic material layers 5.

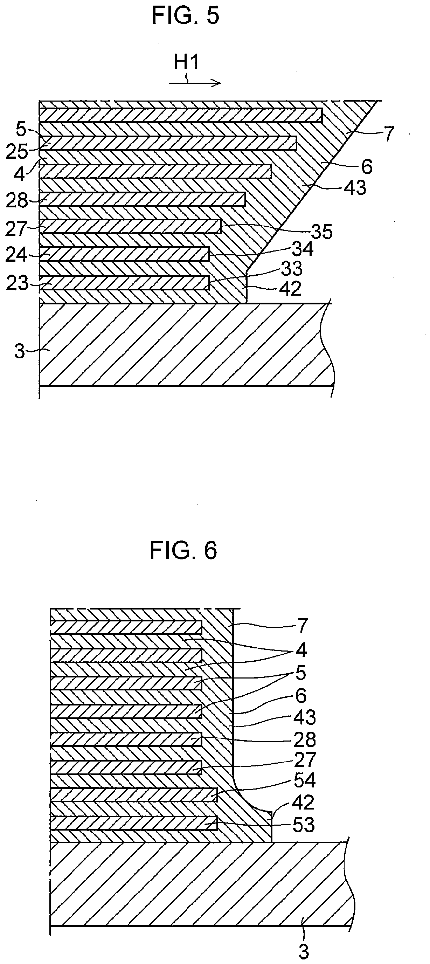

In the above-described seismic isolation apparatus 1, when the substructure vibrates in the horizontal direction H due to the occurrence of an earthquake or the like, the laminated rubber body 7 undergoes elastic deformation in the horizontal direction H, as shown in Fig. 5, whereby the superstructure is seismically isolated from the vibration in the horizontal direction H of the substructure, and the cylindrical columnar lead 15 is caused to undergo plastic deformation and the vibration energy of the substructure with respect to the superstructure is absorbed, to thereby damp that vibration. When the laminated rubber body 7 thus undergoes elastic deformation in the horizontal direction H, the intermediate rigid steel plate 28 is horizontally displaced in a horizontal direction H1 with respect to the intermediate rigid steel plate 27, the intermediate rigid steel plate 27 is horizontally displaced in the horizontal direction H1 with respect to the lower rigid steel plates 23 and 24, and the lower rigid steel plate 24 is horizontally displaced in the horizontal direction H1 with respect to the lower rigid steel plate 23. At this juncture, since the lower rigid steel plates 23 and 24 support the intermediate rigid steel plates 25, mainly the intermediate rigid steel plate 27, stress concentration is made unlikely to occur at that compression-side portion (fillet portion) of the laminated rubber body 7 that is in close proximity to the lower flange plate 3 to thereby make it possible to eliminate the possibility of buckling, and that portion (intermediate portion) where the pluralities of intermediate rigid steel plates 25 and rubber elastic material layers 4 having a sufficient cross-sectional area are alternately laminated make it possible for the seismic isolation apparatus to exhibit the vibration isolation function which it essentially has. Moreover, since the lower rigid steel plate 23 supports the lower rigid steel plate 24 even during such elastic deformation, the plastic deformation and horizontal rigidity of the laminated rubber body 7 can be made more stable. The upper rigid steel plates 21 and 22 in their relationship with the intermediate rigid steel plates 26 and 28 also operate in the same way as the lower rigid steel plates 23 and 24 during the elastic deformation of the laminated rubber body 7.

According to the seismic isolation apparatus 1 in accordance with this embodiment, the apparatus is comprised of the upper flange plate 2 which is connected to the superstructure, the lower flange plate 3 which is connected to the substructure, and the laminated rubber body 7 which is provided between the upper flange plate 2 and the lower flange plate 3 and has the rubber elastic material layers 4 and the rigid material layers 5 which are alternately laminated in the vertical direction V, wherein the rigid material layers 5 include the upper rigid steel plates 21 and 22 serving as at least one upper rigid material layer disposed in close proximity to the upper flange plate 2, the lower rigid steel plates 23 and 24 serving as at least one lower rigid material layer disposed in close proximity to the lower flange plate 3, and the intermediate rigid steel plates 25 serving as a plurality of intermediate rigid material layers disposed between the upper rigid steel plates 21 and 22, on the one hand, and the lower rigid steel plates 23 and 24, on the other hand, in such a manner as to be arranged in the vertical direction V. The upper rigid steel plates 21 and 22 as well as the lower rigid steel plates 23 and 24 are formed to be longer in the horizontal direction H than the intermediate rigid steel plates 26 and 27 serving as adjacent intermediate rigid material layers adjacent to these steel plates among the plurality of intermediate rigid steel plates 25, and the intermediate rigid steel plates 26 and 27 are formed to be equal in length or shorter in the horizontal direction H than the intermediate rigid steel plate 28 serving as a central-side intermediate rigid material layer located closer to the central side in the vertical direction V than these intermediate rigid steel plates 26 and 27. Therefore, it is possible to overcome the stress concentration at those portions (fillet portions) of the laminated rubber body 7 that are in close proximity to respective ones of the upper flange plate 2 and the lower flange plate 3, and the seismic isolation apparatus is capable of exhibiting the vibration isolation function which it essentially has without enlarging the apparatus, such that it is possible to exhibit repeated stress durability which the apparatus essentially has and that it is capable of exhibiting the vibration isolation function with respect to a twisting direction as well.

According to the seismic isolation apparatus 1, the rigid material layers 5 include the plurality of upper rigid steel plates 21 and 22 which are disposed in such a manner as to be juxtaposed to each other in the vertical direction V, and the upper rigid steel plate 21 serving as an uppermost rigid material layer disposed in closest proximity to the upper flange plate 2 between the upper rigid steel plates 21 and 22 is formed so as to be longer in the horizontal direction H than the upper rigid steel plate 22. Therefore, plastic deformation is unlikely to occur at the plurality of upper rigid steel plates 21 and 22 even during the horizontal deformation of the laminated rubber body 7, thereby making it possible to stabilize the rigidity in the horizontal direction H and to eliminate the possibility of occurrence of buckling or the like based on the stress concentration at the fillet portion.

According to the seismic isolation apparatus 1, the rigid material layers 5 include the plurality of lower rigid steel plates 23 and 24 which are disposed in such a manner as to be juxtaposed to each other in the vertical direction V, and the lower rigid steel plate 23 serving as a lowermost rigid material layer disposed in closest proximity to the lower flange plate 3 between the lower rigid steel plates 23 and 24 is formed so as to be longer in the horizontal direction H than the lower rigid steel plate 24. Therefore, plastic deformation is unlikely to occur at the plurality of lower rigid steel plates 23 and 24 even during the horizontal deformation of the laminated rubber body 7, thereby making it possible to stabilize the rigidity in the horizontal direction H and to eliminate the possibility of occurrence of buckling or the like based on the stress concentration at the fillet portion.

It should be noted that, as shown in Fig. 6, the rigid material layers 5 of the seismic isolation apparatus 1 may include, instead of the lower rigid steel plates 23 and 24, lower rigid steel plates 53 and 54 serving as a plurality of lower rigid material layers disposed in such a manner as to be juxtaposed to each other in the vertical direction V and having a mutually equal length in the horizontal direction H. Furthermore, the rigid material layers 5 may include, instead of the upper rigid steel plates 21 and 22, a plurality of upper rigid material layers (not shown) disposed in such a manner as to be juxtaposed to each other in the vertical direction V and having a mutually equal length in the horizontal direction H in the same way as described above.

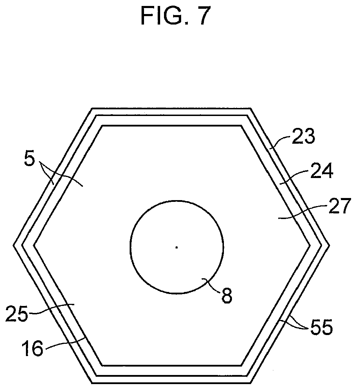

The upper rigid steel plates 21 and 22 and the lower rigid steel plates 23 and 24 respectively have the circular outer peripheral edges 31 and 32 as well as 33 and 34, but may alternatively have polygonal outer peripheral edges 55 which are located horizontally outwardly of the outer peripheral edges 16 of the plurality of intermediate rigid steel plates 25, as shown in Fig. 7. The outer peripheral edges 16 may be circular outer peripheral edges, as described above, or may be polygonal outer peripheral edges. In this case, the cladding layer 6 may have a polygonal tubular shape.

The seismic isolation apparatus 1 in this embodiment has the vibrational energy absorbing body 9, but this arrangement may be omitted, in which case the respective ones of the rubber elastic material layers 4 and the rigid material layers 5 may be respectively formed in a disk-like shape, and the laminated rubber body 7 may be formed in a cylindrical columnar shape.

### DESCRIPTION OF REFERENCE NUMERALS AND SIGNS

- 1:: seismic isolation apparatus
- 2:: upper flange plate
- 3:: lower flange plate
- 4:: rubber elastic material layer
- 5:: rigid material layer
- 6:: cladding layer
- 7:: laminated rubber body
- 9:: vibrational energy absorbing body
- 21, 22:: upper rigid steel plate
- 23, 24, 53, 54:: lower rigid steel plate
- 25, 26, 27, 28:: intermediate rigid steel plate

## Claims

1. A seismic isolation apparatus (1) between a superstructure and a substructure for isolating the superstructure from horizontal vibrations of the substructure,
the seismic isolation apparatus (1) comprising: an upper flange plate (2) which is connected to the superstructure; a lower flange plate (3) which is connected to the substructure; a laminated rubber body (7) which is provided between said upper flange plate (2) and said lower flange plate (3) and has a plurality of rubber elastic material layers (4) and a plurality of rigid material layers (5), both of which are alternately laminated in a vertical direction and are vulcanization bonded to each other, and a hollow cylindrical cladding layer (6) which covers respective the plurality of rubber elastic material layers (4) and outer peripheral edges (16) of the plurality of rigid material layers (5) in such a manner as to be vulcanization bonded to the outer peripheral edges (16) of the plurality of rigid material layers (5) and is integrally formed with the plurality of rubber elastic material layers (4); at least one columnar hole (8) which is provided in the laminated rubber body (7); a cylindrical columnar lead (15) which is disposed in the columnar hole (8); and a pair of disk-like closure members (10, 11) which are respectively fixed to the upper flange plate (2) and the lower flange plate (3) on a lower surface and an upper surface of the cylindrical columnar lead (15) to close the columnar hole (8), **characterized in that**,
said plurality of rigid material layers (5) include a plurality of upper rigid material layers (21, 22) disposed in close proximity to said upper flange plate (2) in such a manner as to be juxtaposed to each other in the vertical direction, a plurality of lower rigid material layers (23, 24) disposed in close proximity to said lower flange plate (3) in such a manner as to be juxtaposed to each other in the vertical direction, and a plurality of intermediate rigid material layers (25) disposed between the plurality of upper rigid material layers (21, 22) and the plurality of lower rigid material layers (23, 24) in such a manner as to be arranged in the vertical direction,
wherein each of the plurality of upper rigid material layers (21, 22) is formed to be longer in a horizontal direction than an upper adjacent intermediate rigid material layer (26) so as to project horizontally outwardly from an outer peripheral edge of the upper adjacent intermediate rigid material layer (26) adjacent to the plurality of upper rigid material layers (21, 22) among the plurality of intermediate rigid material layers (25), each of the plurality of lower rigid material layers (23, 24) is formed to be longer in the horizontal direction than a lower adjacent intermediate rigid material layer (27) so as to project horizontally outwardly from an outer peripheral edge of the lower adjacent intermediate rigid material layer (27) adjacent to the plurality of lower rigid material layers (23, 24) among the plurality of intermediate rigid material layers (25), the upper adjacent intermediate rigid material layer (26) is formed to be equal in length in the horizontal direction with respect to a central-side intermediate rigid material layer (28) located closer to a central side in the vertical direction than the upper adjacent intermediate rigid material layer (26) among the plurality of intermediate rigid material layers (25), and the lower adjacent intermediate rigid material layer (27) is formed to be equal in length in the horizontal direction with respect to the central-side intermediate rigid material layer (28) located closer to the central side in the vertical direction than the lower adjacent intermediate rigid material layer (27) among the plurality of intermediate rigid material layers (25),
wherein an upper cladding portion (41) of the cladding layer (6) which covers the plurality of upper rigid material layers (21, 22) projects horizontally outwardly with respect to a cladding portion (43) of the cladding layer (6) which covers the intermediate rigid material layer (25) and is vulcanization bonded to a lower surface of the upper flange plate (2) disposed in close proximity to the plurality of upper rigid material layers (21, 22), and a lower cladding portion (42) of the cladding layer (6) which covers the plurality of lower rigid material layers (23, 24) projects horizontally outwardly with respect to the cladding portion (43) of the cladding layer (6) which covers the intermediate rigid material layer (25) and is vulcanization bonded to an upper surface of the lower flange plate (3) disposed in close proximity to the plurality of lower rigid material layers (23, 24),
wherein a rubber elastic material layer among the plurality of rubber elastic material layers (4) which comes into contact with the upper flange plate (2) and is interposed between the plurality of upper rigid material layers (21, 22) and the upper flange plate (2) is vulcanization bonded to the lower surface of the upper flange plate (2), and a rubber elastic material layer among the plurality of rubber elastic material layers (4) which comes into contact with the lower flange plate (3) and is interposed between the plurality of lower rigid material layers (23, 24) and the lower flange plate (3) is vulcanization bonded to the upper surface of the lower flange plate (3),
wherein an uppermost rigid material layer disposed in closest proximity to said upper flange plate (2) among the plurality of upper rigid material layers (21, 22) is formed so as to be longer than other upper rigid material layers excluding the uppermost rigid material layer so as to project horizontally outwardly from outer peripheral edges of the other upper rigid material layers excluding the uppermost rigid material layer, and a lowermost rigid material layer disposed in closest proximity to said lower flange plate (3) among the plurality of lower rigid material layers (23, 24) is formed so as to be longer than other lower rigid material layers excluding the lowermost rigid material layer so as to project horizontally outwardly from outer peripheral edges of the other lower rigid material layers excluding the lowermost rigid material layer, and
wherein each of the plurality of upper rigid material layers (21, 22) has an upper circular outer peripheral edge located horizontally outwardly of circular outer peripheral edges (35) of the plurality of intermediate rigid material layers (25), and each of the plurality of the lower rigid material layers (23, 24) has a lower circular outer peripheral edge located horizontally outwardly of circular outer peripheral edges (35) of the plurality of intermediate rigid material layers (25), the upper circular outer peripheral edge and the lower circular outer peripheral edge being greater in diameter than the circular outer peripheral edges (35) of the plurality of intermediate rigid material layers (25).

## Patentansprüche

1. Seismische Isolierungsvorrichtung (1) zwischen einem Oberbau und einem Unterbau zur Isolierung des Oberbaus von horizontalen Vibrationen des Unterbaus, wobei die seismische Isolierungsvorrichtung (1) Folgendes umfasst: eine mit dem Oberbau verbundene obere Flanschplatte (2); eine mit dem Unterbau verbundene untere Flanschplatte (3); einen zwischen der oberen Flanschplatte (2) und der unteren Flanschplatte (3) angeordneten laminierten Gummikörper (7) mit einer Vielzahl von elastischen Gummimaterialschichten (4) und einer Vielzahl von steifen Materialschichten (5), welche abwechselnd in vertikaler Richtung laminiert sind und durch Vulkanisation miteinander verbunden sind; und eine hohle zylindrische Hüllschicht (6), welche jeweils die Vielzahl von elastischen Gummimaterialschichten (4) und Außenumfangsränder (16) der Vielzahl von steifen Materialschichten (5) derart überdeckt, dass sie durch Vulkanisation mit den Außenumfangsrändern (16) der Vielzahl von steifen Materialschichten (5) verbunden ist und einstückig mit der Vielzahl von elastischen Gummimaterialschichten (4) ausgebildet ist; mindestens ein in dem laminierten Gummikörper (7) angeordnetes, säulenförmiges Loch (8); eine in dem säulenförmigen Loch (8) angeordnete, säulenförmige Leitung (15); und ein Paar scheibenförmiger Schließelemente (10, 11), die jeweils an der oberen Flanschplatte (2) und an der unteren Flanschplatte (3) auf einer Oberseite und einer Unterseite der zylindrischen säulenförmigen Leitung (15) zum Schließen des säulenförmigen Lochs (8) angebracht ist, **dadurch gekennzeichnet,**
**dass** die Vielzahl von steifen Materialschichten (5) Folgendes umfasst: eine Vielzahl von steifen Materialoberschichten (21, 22), welche unmittelbar an der oberen Flanschplatte (2) derart angeordnet ist, dass sie in vertikaler Richtung nebeneinander angeordnet sind; eine Vielzahl von steifen Materialunterschichten (23, 24), welche unmittelbar an der unteren Flanschplatte (3) derart angeordnet ist, dass sie in vertikaler Richtung nebeneinander angeordnet sind; und eine Vielzahl von steifen Materialzwischenschichten (25), welche derart zwischen der Vielzahl von steifen Materialoberschichten (21, 22) und der Vielzahl von steifen Materialunterschichten (23, 24) angeordnet ist, dass sie in vertikaler Richtung angebracht ist,
wobei jede der Vielzahl von steifen Materialoberschichten (21, 22) in horizontaler Richtung länger ausgebildet ist als eine angrenzende obere steife Materialzwischenschicht (26), sodass sie horizontal über einen Außenumfangsrand der angrenzenden oberen steifen Materialzwischenschicht (26) hinausragt, welche an die Vielzahl von steifen Materialoberschichten (21, 22) unter der Vielzahl von steifen Materialzwischenschichten (25) grenzt, wobei jede der Vielzahl von steifen Materialunterschichten (23, 24) in horizontaler Richtung länger ausgebildet sein soll als eine angrenzende untere steife Materialzwischenschicht (27), sodass sie horizontal über einen Außenumfangsrand der angrenzenden unteren steifen Materialzwischenschicht (27) hinausragt, welche an die Vielzahl von steifen Materialunterschichten (23, 24) unter der Vielzahl von steifen Materialzwischenschichten (25) grenzt, wobei die angrenzende obere steife Materialzwischenschicht (26) in horizontaler Richtung genauso lang wie eine mittige steife Materialzwischenschicht (28) ausgebildet ist, welche in vertikaler Richtung näher an eine Mitte als die angrenzende obere steife Materialzwischenschicht (26) unter der Vielzahl von steifen Materialzwischenschichten (25) angeordnet ist, und wobei die angrenzende untere steife Materialzwischenschicht (27) in horizontaler Richtung genauso lang wie die mittige steife Materialzwischenschicht (28) ausgebildet ist, welche in vertikaler Richtung näher an eine Mitte als die angrenzende untere steife Materialzwischenschicht (27) unter der Vielzahl von steifen Materialzwischenschichten (25) angeordnet ist,
wobei ein oberer Hüllabschnitt (41) der Hüllschicht (6), welche die Vielzahl von steifen Materialoberschichten (21, 22) bedeckt, horizontal über einen Hüllabschnitt (43) der Hüllschicht (6) hinausragt, welche die Vielzahl von steifen Materialzwischenschichten (25) bedeckt und durch Vulkanisation mit einer Unterseite der oberen Flanschplatte (2) verknüpft ist, welche unmittelbar an die Vielzahl von steifen Materialoberschichten (21, 22) angeordnet ist, und wobei ein unterer Hüllabschnitt (42) der Hüllschicht (6), welche die Vielzahl von steifen Material-unterschichten (23, 24) bedeckt, horizontal über den Hüllabschnitt (43) der Hüllschicht (6) hinausragt, welche die steife Materialzwischenschicht (25) bedeckt und durch Vulkanisation mit der Oberseite der unteren Flanschplatte (3) verknüpft ist, welche unmittelbar an die Vielzahl von steifen Materialunterschichten (23, 24) angeordnet ist, wobei eine elastische Gummimaterialschicht unter der Vielzahl von elastischen Gummimaterialschichten (4), welche zur Anlage gegen die obere Flanschplatte (2) kommt und zwischen der Vielzahl von steifen Materialoberschichten (21, 22) und der oberen Flanschplatte (2) angeordnet ist, durch Vulkanisation mit der Unterseite der oberen Flanschplatte (2) verbunden ist, und wobei eine elastische Gummimaterialschicht unter der Vielzahl von elastischen Gummimaterialschichten (4), welche zur Anlage gegen die untere Flanschplatte (3) kommt und zwischen der Vielzahl von steifen Materialunterschichten (23, 24) und der unteren Flanschplatte (3) angeordnet ist, durch Vulkanisation mit der Oberseite der unteren Flanschplatte (3) verbunden ist,
wobei eine oberste steife Materialschicht, welche am nächsten zu der oberen Flanschplatte (2) unter der Vielzahl von steifen Materialoberschichten (21, 22) angeordnet ist, derart geformt ist, dass sie länger als andere steife Materialoberschichten, ausschließlich der obersten steifen Materialschicht, ausgebildet ist, sodass sie horizontal über Außenumfangsränder von anderen steifen Materialoberschichten, ausschließlich der obersten steifen Materialschicht, hinausragt, und wobei eine unterste steife Materialschicht, welche am nächsten der unteren Flanschplatte (3) unter der Vielzahl von steifen Materialunterschichten (23, 24) angeordnet ist, derart geformt ist, dass sie länger als andere steife Materialunterschichten, ausschließlich der untersten steifen Materialschicht, ausgebildet ist, sodass sie horizontal über Außenumfangsränder von anderen steifen Materialunterschichten, ausschließlich der untersten steifen Materialschicht, hinausragt, und
wobei jede der Vielzahl von steifen Materialoberschichten (21, 22) einen kreisrunden oberen Außenumfangsrand umfasst, welcher in horizontaler Richtung außerhalb von kreisrunden Außenumfangsrändern (35) der Vielzahl von steifen Materialzwischenschichten (25) angeordnet ist, und wobei jede der Vielzahlen von steifen Materialunterschichten (23, 24) einen kreisrunden unteren Außenumfangsrand umfasst, welche in horizontaler Richtung außerhalb von kreisrunden Außenumfangsrändern (35) der Vielzahl von steifen Materialzwischenschichten (25) angeordnet ist, wobei der kreisrunde obere Außenumfangsrand und der kreisrunde untere Außenumfangsrand größer im Durchmesser sind als die kreisrunden Außenumfangsränder (35) der Vielzahl von steifen Materialzwischenschichten (25).

## Revendications

1. Dispositif d'isolation sismique (1) entre une superstructure et une infrastructure pour isoler la superstructure contre les vibrations horizontales de l'infrastructure,
le dispositif d'isolation sismique (1) comportant : un flasque supérieur (2) monté sur la superstructure ; un flasque inférieur (3) monté sur l'infrastructure ; un corps en caoutchouc stratifié (7) qui est disposé entre ledit flasque supérieur (2) et ledit flasque inférieur (3) et a une pluralité de couches de matière élastique en caoutchouc (4) et une pluralité de couches de matière rigide (5), les unes et les autres étant stratifiées en alternance verticalement et étant collées les unes aux autres par vulcanisation, et une couche de gainage cylindrique creuse (6) qui couvre respectivement la pluralité de couches de matière élastique en caoutchouc (4) et des bords périphériques extérieurs (16) de la pluralité de couches de matière rigide (5) de telle manière qu'elle soit collée par vulcanisation aux bords périphériques extérieurs (16) de la pluralité de couches de matière rigide (5) et qu'elle soit formée solidairement de la pluralité de couches de matière élastique en caoutchouc (4) ; au moins un trou (8) en forme de colonne ménagé dans le corps en caoutchouc stratifié (7) ; un conduit cylindrique (15) en forme de colonne disposé dans le trou (8) en forme de colonne ; et une paire d'éléments de fermeture (10, 11) en forme de disques respectivement fixés au flasque supérieur (2) et au flasque inférieur (3) sur une surface inférieure et une surface supérieure du conduit cylindrique (15) en forme de colonne afin de fermer le trou (8) en forme de colonne, **caractérisé en ce que**
ladite pluralité de couches de matière rigide (5) comprend une pluralité de couches supérieures de matière rigide (21, 22) disposées à proximité immédiate dudit flasque supérieur (2) de manière à être juxtaposées les unes aux autres verticalement, une pluralité de couches inférieures de matière rigide (23, 24) disposées à proximité immédiate dudit flasque inférieur (3) de manière à être juxtaposées les unes aux autres verticalement, et une pluralité de couches intermédiaires de matière rigide (25) disposées entre la pluralité de couches supérieures de matière rigide (21, 22) et la pluralité de couches inférieures de matière rigide (23, 24) de manière à être disposées verticalement,
chaque couche de la pluralité de couches supérieures de matière rigide (21, 22) étant formée de manière à être horizontalement plus longue qu'une couche intermédiaire adjacente supérieure de matière rigide (26) de façon à dépasser, horizontalement vers l'extérieur, d'un bord périphérique extérieur de la couche intermédiaire adjacente supérieure de matière rigide (26) au voisinage immédiat de la pluralité de couches supérieures de matière rigide (21, 22) parmi la pluralité de couches intermédiaires de matière rigide (25), chaque couche de la pluralité de couches inférieures de matière rigide (23, 24) étant formée de manière à être horizontalement plus longue qu'une couche intermédiaire adjacente inférieure de matière rigide (27) de façon à dépasser, horizontalement vers l'extérieur, d'un bord périphérique extérieur de la couche intermédiaire adjacente inférieure de matière rigide (27) au voisinage immédiat de la pluralité de couches inférieures de matière rigide (23, 24) parmi la pluralité de couches intermédiaires de matière rigide (25), la couche intermédiaire adjacente supérieure de matière rigide (26) étant formée de manière, à avoir, horizontalement, une longueur égale à celle d'une couche intermédiaire, du côté central, de matière rigide (28) située, verticalement, plus près d'un côté central que la couche intermédiaire adjacente supérieure de matière rigide (26) parmi la pluralité de couches intermédiaires de matière rigide (25), et la couche intermédiaire adjacente inférieure de matière rigide (27) étant formée de manière, à avoir, horizontalement, une longueur égale à celle d'une couche intermédiaire, du côté central, de matière rigide (28) située, verticalement, plus près du côté central que la couche intermédiaire adjacente inférieure de matière rigide (27) parmi la pluralité de couches intermédiaires de matière rigide (25),
une partie supérieure de gainage (41) de la couche de gainage (6) qui couvre la pluralité de couches supérieures de matière rigide (21, 22) dépassant horizontalement, vers l'extérieur, d'une partie de gainage (43) de la couche de gainage (6) qui couvre la couche intermédiaire de matière rigide (25) et étant collée par vulcanisation à une surface inférieure du flasque supérieur (2) disposée à proximité immédiate de la pluralité de couches supérieures de matière rigide (21, 22), et une partie inférieure de gainage (42) de la couche de gainage (6) qui couvre la pluralité de couches inférieures de matière rigide (23, 24) dépassant horizontalement, vers l'extérieur, de la partie de gainage (43) de la couche de gainage (6) qui couvre la couche intermédiaire de matière rigide (25) et étant collée par vulcanisation à une surface supérieure du flasque inférieur (3) disposée à proximité immédiate de la pluralité de couches inférieures de matière rigide (23, 24),
une couche de matière élastique en caoutchouc, parmi la pluralité de couches de matière élastique en caoutchouc (4), qui vient au contact du flasque supérieur (2) et est intercalée entre la pluralité de couches supérieures de matière rigide (21, 22) et le flasque supérieur (2) étant collée par vulcanisation à la surface inférieure du flasque supérieur (2), et une couche de matière élastique en caoutchouc, parmi la pluralité de couches de matière élastique en caoutchouc (4), qui vient au contact du flasque inférieur (3) et est intercalée entre la pluralité de couches inférieures de matière rigide (23, 24) et le flasque inférieur (3) étant collée par vulcanisation à la surface supérieure du flasque inférieur (3),
parmi la pluralité de couches supérieures de matière rigide (21, 22), une couche de matière rigide disposée sur le dessus, le plus près dudit flasque supérieur (2), étant formée de manière à être plus longue que d'autres couches supérieures de matière rigide à l'exclusion de la couche de matière rigide située sur le dessus de manière à dépasser, horizontalement vers l'extérieur, de bords périphériques extérieurs des autres couches supérieures de matière rigide à l'exclusion de la couche de matière rigide située sur le dessus, et, parmi la pluralité de couches inférieures de matière rigide (23, 24), une couche de matière rigide disposée sur le dessous, le plus près dudit flasque inférieur (3), étant formée de manière à être plus longue que d'autres couches inférieures de matière rigide à l'exclusion de la couche de matière rigide située sur le dessous de manière à dépasser, horizontalement vers l'extérieur, de bords périphériques extérieurs des autres couches inférieures de matière rigide à l'exclusion de la couche de matière rigide située sur le dessous, et
chaque couche parmi la pluralité de couches supérieures de matière rigide (21, 22) ayant un bord périphérique extérieur supérieur circulaire situé horizontalement vers l'extérieur de bords périphériques extérieurs circulaires (35) de la pluralité de couches intermédiaires de matière rigide (25), et chaque couche parmi la pluralité de couches inférieures de matière rigide (23, 24) ayant un bord périphérique extérieur inférieur circulaire situé horizontalement vers l'extérieur de bords périphériques extérieurs circulaires (35) de la pluralité de couches intermédiaires de matière rigide (25), le bord périphérique extérieur supérieur circulaire et le bord périphérique extérieur inférieur circulaire ayant un plus grand diamètre que les bords périphériques extérieurs circulaires (35) de la pluralité de couches intermédiaires de matière rigide (25).
